Europäisches Patentamt

European Patent Office

Office européen des brevets

(19)

(11) Publication number: **0 333 486**
A1

## (12) EUROPEAN PATENT APPLICATION

(21) Application number: 89302622.9

(22) Date of filing: 16.03.89

(51) Int. Cl.⁴: **B 60 H 1/32**

(30) Priority: 17.03.88 JP 34439/88

(43) Date of publication of application:
20.09.89 Bulletin 89/38

(84) Designated Contracting States: DE FR GB IT SE

(71) Applicant: SANDEN CORPORATION
20 Kotobuki-cho
Isesaki-shi Gunma, 372 (JP)

(72) Inventor: Shimazaki, Seiji
976 Nagamuna-cho
Isesaki-shi Gunma 372 (JP)

(74) Representative: Jackson, Peter Arthur et al
GILL JENNINGS & EVERY 53-64 Chancery Lane
London WC2A 1HN (GB)

(54) Cooling unit including a evaporator.

(57) The vibration of an evaporator (15) in an automotive
passenger compartment owing to vibration of a casing (21) of a
cooling unit produced by pulsation of a refrigerant flow is
effectively absorbed into a resilient member (31) which
surrounds a periphral surface of the evaporator.

Fig.5

EP 0 333 486 A1

Bundesdruckerei Berlin

**Description**

## COOLING UNIT INCLUDING A EVAPORATOR

This invention relates to a cooling unit, including an evaporator, for use in an automotive air conditioning system.

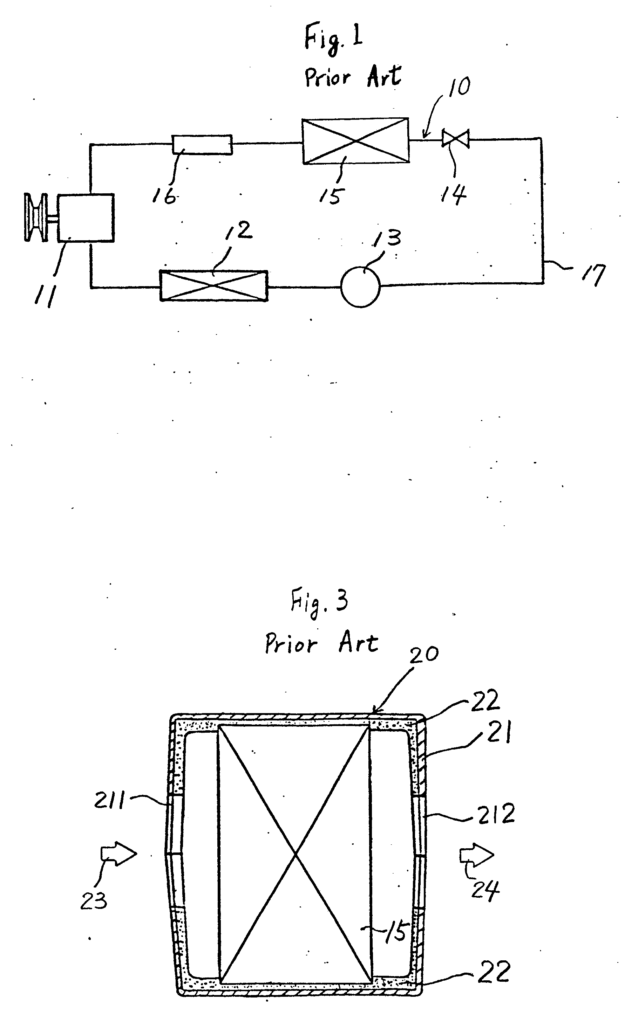

Figures 1 to 3 of the accompanying drawings show a refrigerating circuit of an automotive air conditioning system in accordance with the prior art. The refrigerating circuit 10 includes a compressor 11, a condenser 12, a receiver-dryer 13, an expansion valve 14, an evaporator 15 and a silencer 16. In the refrigerating circuit 10, refrigerant gas is compressed by the compressor 11. Compressed refrigerant gas flows to the condenser 12 and is condensed therein by heat exchange. Condensed refrigerant flows to the expansion valve 14, via the receiver-dryer 13, and is expanded thereby. Expanded refrigerant then flows to the evaporator 15 and is vaporizised therein by heat exchange. Vaporized refrigerant returns to the compressor 11 via the silencer 16. The silencer 16 damps pulsation of the refrigerant flow due to refrigerant being sucked into the compressor 11 through valved ports (not shown). The pulsation of the refrigerant flow causes a casing 21 to vibrate so that an offensive noise is produced in an automotive passenger compartment. Each element 11-16 of the refrigerating circuit 10 is connectd by a conduit 17.

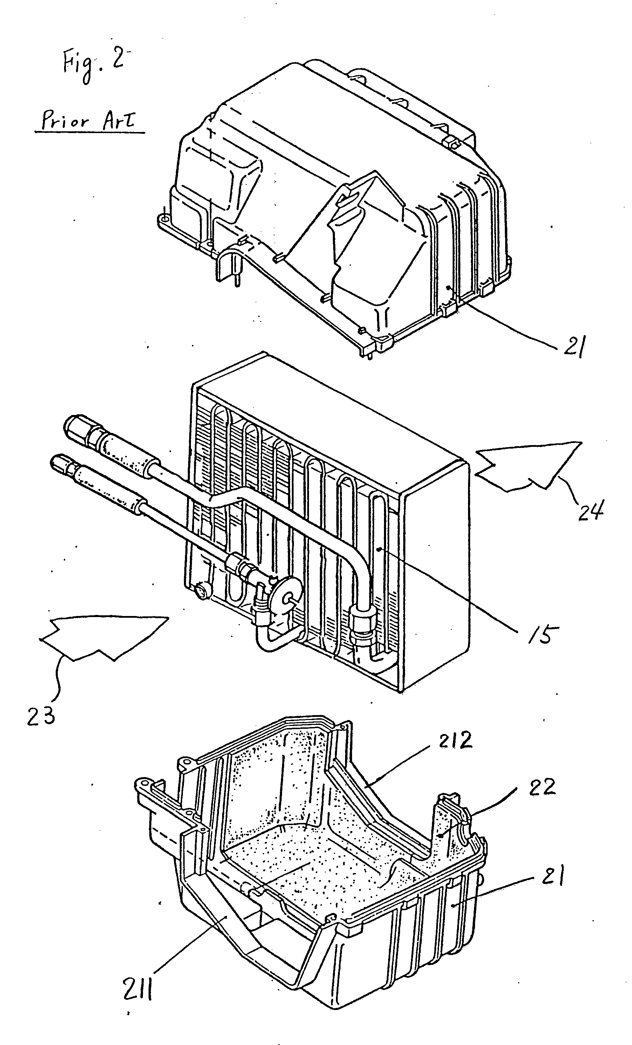

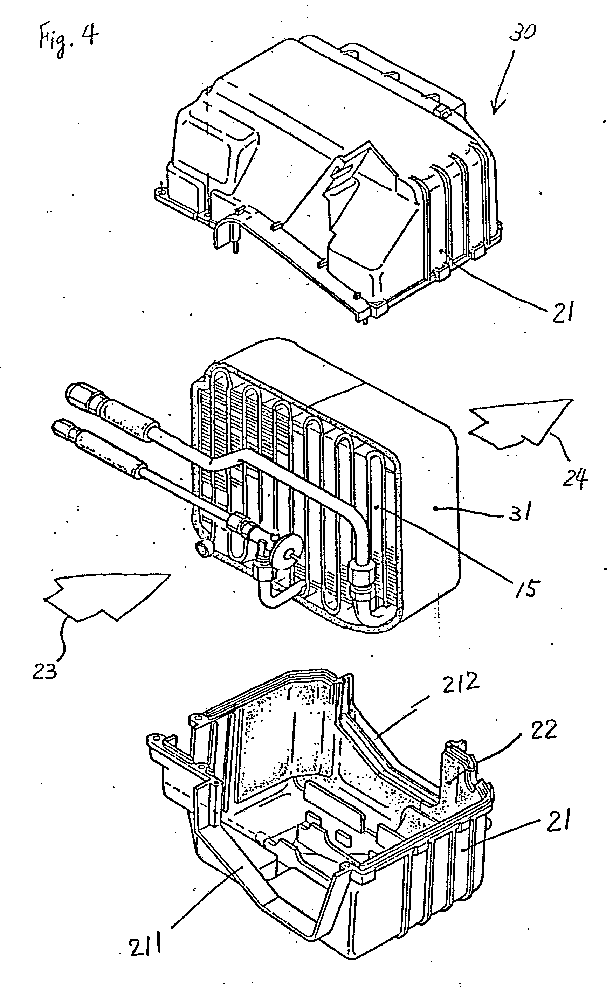

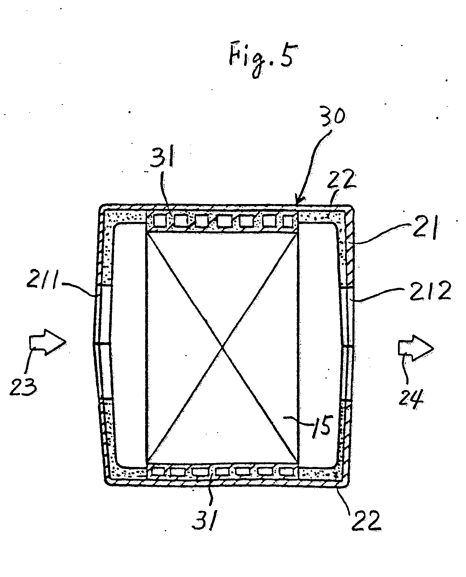

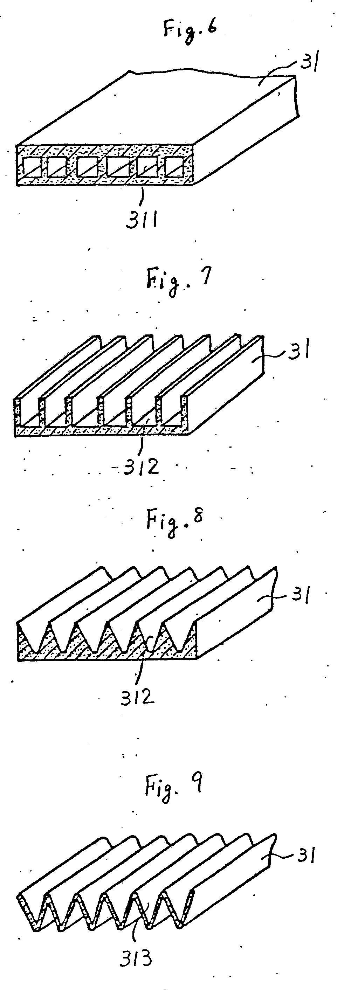

Figures 2 and 3 show a cooling unit 20 including the casing 21 having air inlet and air outlet openings 211, 212 and the evaporator 15. A heat insulating member 22 made of foamed polystyrene lines an inner surface of the casing 21. The evaporator 15 is air-tightly disposed within the casing 21 through the heat insulating member 22. In the cooling unit 20, air passes through the evaporator 15 through the air inlet and air outlet openings 211, 212 by operation of an evaporator motor fan (not shown) as indicated by arrows 23, 24 whereby the refrigerant in the evaporator 15 absorbs heat from the air as heat of evaporation.

In the prior art, the offensive noise produced in the automotive passenger compartment owing to pulsation of the refrigerant flow is eliminated or decreased by disposing the silencer 16 between the evaporator 15 and the compressor 11. However, to so dispose the silencer 16 increases the process of assembling the automotive air conditioning system and raises the cost of parts owing to the additional use of the silencer 16.

It is a primary object to eliminate or decrease the offensive noise produced in an automotive passenger compartment due to pulsation of a refrigerant flow without disposing a silencer between the evaporator and compressor.

According to the invention, a cooling unit for an automotive air conditioning system, the unit comprising a casing, and an evaporator disposed within the casing, the casing including air inlet and air outlet openings for passing air through the evaporator; is characterised by a resilient member surrounding a periphral surface of the evaporator.

In the accompanying drawings:-

Figure 1 is a block diagram of a prior refrigerating circuit of an automotive air conditioning system;

Figure 2 is an exploded perspective view of a prior cooling unit;

Figure 3 is a sectional side view of the cooling unit shown in Figure 2;

Figure 4 is an exploded perspective view of a cooling unit in accordance with the present invention;

Figure 5 is a sectional side view of the cooling unit shown in Figure 4;

Figure 6 is an enlarged fragmentary perspective view of a resilient member shown in Figure 5; and,

Figures 7 to 9 are enlarged fragmentary perspective views of second, third and fourth examples of resilient members.

As shown in Figures 4 and 5, a cooling unit 30 includes a casing 21 having air inlet and air outlet openings 211, 212 and an evaporator 15. A belt-shaped resilient member 31 surrounds a periphral surface of the evaporator 15 of which respective side surfaces face air inlet and air outlet openings 211, 212. The resilient member 31 is made of rubber and comprises a plurality of passages 311 extending therethrough. A transverse cross section of the holes 311 is rectangular as shown in Figure 6. The evaporator 15 is air-tightly disposed within the casing 21 through the resilient member 31. A heat insulating member 22 made of foamed polystyrene lines the inner surface of the casing 21 except where the evaporator 15 is disposed. But the member 31 also has heat insulating characteristics so that a heat insulating effect between the evaporator 15 and casing 21 is not reduced.

When the associated automotive air conditioning system operates, vibration of the evaporator 15 due to pulsation of refrigerant flow is effectively absorbed by the resilient member 31. As a result, the transfer of vibration from the evaporator 15 to the casing 21 is prevented so that offensive noise produced in an automotive passenger compartment is eliminated or reduced.

The open portion of the resilient member 31 may be obtained by plurality of longitudinal grooves 312 of rectangular or triangular cross section as shown in Figures 7 or 8. Also, the open portions of the member 31 may be obtained by forming the member with a plurality of waves 313 as shown in Figure 9.

## Claims

1. A cooling unit for an automotive air conditioning system, the unit comprising a casing (21), and an evaporator (15) disposed within the casing, the casing including air inlet and air outlet openings (211,212) for passing air through the evaporator; characterised by a resilient member (31) surrounding a periphral surface of the evaporator.

2. A unit according to claim 1, wherein the resilient member comprises a plurality of openings (311-313).

3. A unit according to claim 2, wherein the opening are a plurality of passages extending through the resilient member.

4. A unit according to claim 3, wherein the cross section of the passages (311) is rectangular.

5. A unit according to claim 2, wherein the openings are a grooves (212,313) in the resilient member.

6. A unit according to claim 5, wherein the cross section of the grooves is rectangular (Fig. 7).

7. A unit according to claim 5, wherein the cross section of the grooves is substantially triangular (Fig. 8).

8. A unit according to claim 1, wherein the resilient member is wave-shaped (Fig. 9).

9. A unit according to any one of the preceding claims, wherein the resilient member is made of rubber.

10. A unit according to any one of the preceding claims, wherein respective side surfaces of the evaporator (15) face the air inlet and air outlet openings (211,212) of the casing.

11. A unit according to any one of the preceding claims, wherein the resilient member (31) is air-tightly disposed between the casing (21) and the evaporator (15).

Fig. 1
Prior Art

Fig. 3
Prior Art

Fig. 2

Prior Art

21

24

15

23

212

22

21

211

Fig. 4

Fig.5

Fig. 6

31

311

Fig. 7

31

312

Fig. 8

31

312

Fig. 9

31

313

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 690 209 (C.I. MARTIN)<br>--- | 1,11 | B 60 H 1/32 |
| Y | GB-A- 554 944 (LORD MANUFACTURING CO.)<br>* Page 1, lines 56-67; figures * | 1,11 | |
| A | ----- | 2-9 | |

TECHNICAL FIELDS SEARCHED (Int. Cl.4)

B 60 H
F 25 B
F 16 F
F 25 D

The present search report has been drawn up for all claims

| Place of search | Date of completion of the search | Examiner |
|---|---|---|
| THE HAGUE | 19-06-1989 | ESPEEL R.P. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
................................................................................
& : member of the same patent family, corresponding
   document

EPO FORM 1503 03.82 (P0401)